# EUROPEAN PATENT APPLICATION

(11) **EP 4 760 938 A1**
(43) Date of publication of application: **17.06.2026**
(21) Application number: 25202054.0
(22) Date of filing: 15.09.2025
(51) Int. Cl.: H01M 50/30, H01M 10/04, H01M 10/058, H01M 50/109, H01M 50/153, H01M 50/188, H01M 50/184, H01M 50/559

(54) **BATTERY AND MANUFACTURING METHOD OF SECONDARY BATTERY**

(30) Priority: 12.12.2024 KR 20240185168
(71) Applicant: SAMSUNG SDI CO., LTD., Yongin-si, Gyeonggi-do 17084 (KR)
(72) Inventor: Maeng, Jiyoung, 17084 Yongin-si, Gyeonggi-do (KR)
(74) Representative: Meissner Bolte Partnerschaft mbB

(57) **Abstract**

A method of manufacturing a secondary battery includes preparing an electrode assembly that includes a first electrode including an electrode tab, a second electrode, and a separator, inserting the electrode assembly into a case that includes an opening configured to expose an upper surface of the electrode assembly, preparing a cap assembly that includes a cap plate having a conduction hole, a terminal plate on an upper portion of the cap plate and configured to be electrically connected to the electrode tab through the conduction hole, and a breakable degassing member between the cap plate and the terminal plate and having an empty space formed therein, coupling the case and the cap assembly, and performing a degassing step in which the degassing member is broken such that gas inside the case is discharged to an outside of the case.

## Description

### BACKGROUND

### 1. Field

The present invention relates to a secondary battery and a method of manufacturing the secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Recently, as the demand for wearable devices such as wireless headphones or earphones, smart watches, and body-worn medical devices increases, there is an increasing demand for secondary batteries with high energy density and sufficiently small size. For example, coin cells or button cells may be used as secondary batteries, the height of which may significantly smaller than the width depending on the characteristics of usage environments.

In a coin-type battery or a button-type battery, unlike a pouch-type battery, a process of releasing gas generated during a formation process and during charging/discharging steps may not be performed separately. However, if the gas release process is not performed separately in this manner, stability problems of the battery may occur.

The above information disclosed in this background section is for enhancement of understanding of the background of the present invention, and therefore, it may contain information that does not constitute related (or prior) art

### SUMMARY

The present invention concerns a secondary battery and a method of manufacturing the secondary battery in order to solve the above problems.

However, the technical problem to be solved by the present invention is not limited to the above problem, and other problems not mentioned herein, and aspects and features of the present invention that would address such problems, will be clearly understood by those skilled in the art from the description of the present invention below.

The present invention concerns a method of manufacturing a secondary battery including: preparing an electrode assembly that includes a first electrode including an electrode tab, a second electrode, and a separator interposed between the first electrode and the second electrode; inserting the electrode assembly into a case that includes an opening configured to expose an upper surface of the electrode assembly; preparing a cap assembly that includes a cap plate having a conduction hole formed therein, a terminal plate on an upper portion of the cap plate and configured to be electrically connected to the electrode tab through the conduction hole, and a, in particular breakable, degassing member between the cap plate and the terminal plate and having an empty space formed therein; coupling the case and the cap assembly; and performing a degassing step in which the degassing member is broken such that gas inside the case is discharged to an outside of the case.

The degassing member may be configured to break in response to a pressure greater than or equal to a predetermined threshold being applied to the degassing member.

Performing the degassing step may include breaking the degassing member by applying pressure to the terminal plate in a direction toward the cap plate.

Performing the degassing step may include breaking the degassing member by pressure of a gas generated inside the case.

The degassing step may be performed during or after a formation process.

The degassing member may include an outer surface contacting the cap plate and the terminal plate, and an inner surface forming the empty space therein.

A thickness between the outer surface and the inner surface of the degassing member may be greater than or equal to approximately 0.045 mm.

Performing the degassing step may include separating the degassing member into an upper member and a lower member by breakage, and releasing the gas inside the case between the upper member and the lower member.

The degassing member may include an adhesive material.

The degassing member may include an electrically insulating material.

A width of the degassing member may be greater than a width of the terminal plate.

A width of the degassing member may be less than a width of the cap plate.

The cap assembly further may include an insulating member between the terminal plate and the degassing member.

Another aspect of the invention concerns a cap assembly for a secondary battery including: a cap plate configured to be coupled to a case of the secondary battery and having a conduction hole that exposes a portion of the case; a terminal plate on an upper portion of the cap plate and configured to be electrically connected to an electrode tab of the secondary battery through the conduction hole; and a degassing member between the cap plate and the terminal plate and having an empty space therein.

The degassing member may be configured to break in response to a pressure greater than or equal to a predetermined threshold being applied.

The degassing member may include an outer surface contacting the cap plate and the terminal plate, and an inner surface forming the empty space therein.

A thickness between the outer surface and the inner surface of the degassing member may be approximately 0.045 mm or more.

The degassing member may include an adhesive material and an electrically insulating material.

A width of the degassing member may be greater than a width of the terminal plate and less than a width of the cap plate.

The cap assembly for a secondary battery may further include an insulating member between the terminal plate and the degassing member.

### ADVANTAGEOUS EFFECTS

According to various embodiments of the present invention, gas generated inside the case during a formation process may cause breakage of the degassing member by internal pressure such that the internal gas is discharged to the outside.

According to various embodiments of the present invention, gas generated inside the case after the formation process may be discharged (vented) to the outside by breaking the degassing member through an external application of pressure to the cap assembly.

According to various embodiments of the present invention, the degassing member may include an insulating material, thereby serving as an insulator between the terminal plate and the cap plate.

According to various embodiments of the present invention, foreign matter may also be discharged together by the pressure of gas that is released when the degassing member is broken, thereby preventing a short circuit of the secondary battery.

However, aspects and features of the present invention are not limited to those described above, and other aspects and features not mentioned will be clearly understood by a person skilled in the art from the detailed description, described below.

### BRIEF DESCRIPTION OF THE DRAWINGS

The following drawings attached to the present specification illustrate embodiments of the present invention, and further describe aspects and features of the present invention together with the detailed description of the present invention. Thus, the present invention should not be construed as being limited to the drawings:
FIG. 1 is a perspective view illustrating a secondary battery according to an embodiment of the present invention.
FIG. 2 is an exploded perspective view illustrating a secondary battery according to an embodiment of the present invention.
FIG. 3 is a cross-sectional view illustrating a cap assembly including a degassing member according to an embodiment of the present invention.
FIG. 4 is a cross-sectional view illustrating the degassing member according to an embodiment of the present invention.
FIG. 5 is a diagram illustrating an example in which a degassing member is broken by external pressure so that gas inside a case is discharged to the outside according to an embodiment of the present invention.
FIG. 6 is a diagram illustrating an example in which a degassing member is broken by internal pressure so that gas inside a case is discharged to the outside according to an embodiment of the present invention.
FIG. 7 is a diagram illustrating a state after the degassing member is broken according to an embodiment of the present invention.
FIG. 8 is an enlarged view illustrating the state after the degassing member of FIG. 7 is broken.
FIG. 9 is a cross-sectional view illustrating a cap assembly including a degassing member according to another embodiment of the present invention.
FIG. 10 is a flowchart illustrating an example of a method of manufacturing a secondary battery according to an embodiment of the present invention.

### DETAILED DESCRIPTION

Hereinafter, embodiments of the present invention will be described, in detail, with reference to the accompanying drawings. The terms or words used in the present specification and claims are not to be limitedly interpreted as general or dictionary meanings and should be interpreted as meanings and concepts that are consistent with the technical idea of the present invention on the basis of the principle that an inventor can be his/her own lexicographer to appropriately define concepts of terms to describe his/her invention in the best way.

The embodiments described in this specification and the configurations shown in the drawings are only some of the embodiments of the present invention and do not represent all of the technical spirit, aspects, and features of the present invention. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified. The terms used in the present specification are for describing embodiments of the present invention and are not intended to limit the present invention.

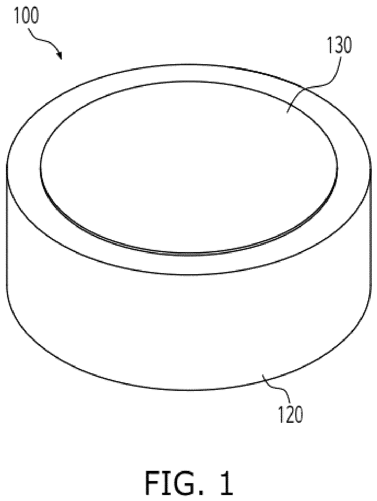

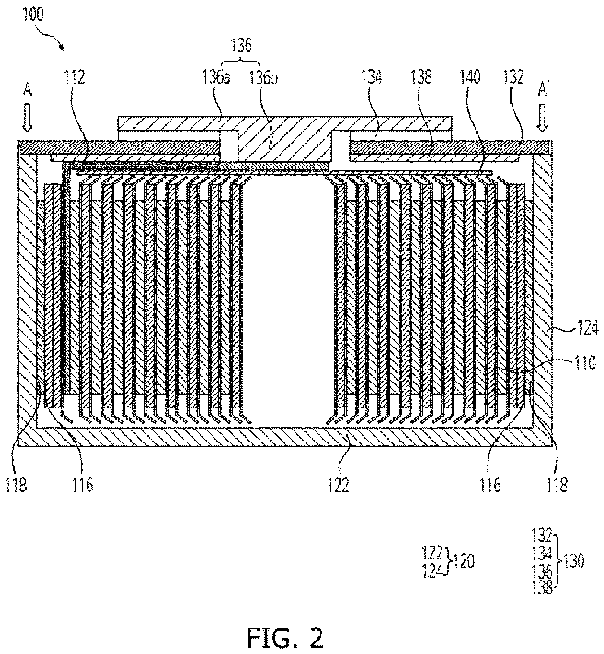

FIG. 1 is a perspective view illustrating a secondary battery according to an embodiment of the present invention, and FIG. 2 is an exploded perspective view illustrating a secondary battery according to an embodiment of the present invention.

A secondary battery according to one or more embodiments is a micro-sized secondary battery and may be a coin cell or a button cell but is not limited thereto and may be a cylindrical or pin-type battery.

The coin cell or button cell is a battery in the form of a thin coin or button and may refer to a battery having a ratio of height to diameter (height/diameter) of 1 or less but is not limited thereto. Because the coin cell or button cell is generally cylindrical, the cross section in the horizontal direction is generally circular. However, the cross section in the horizontal direction is not limited thereto and may have an elliptical or polygonal shape. The diameter may refer to a maximum distance in the horizontal direction of the battery, and the height may refer to a maximum distance in the vertical direction of the battery (e.g., distance from the flat bottom surface to the flat top surface of the battery).

Referring to FIGS. 1 and 2, a secondary battery 100 according to an embodiment of the present invention includes a case 120 and a cap assembly 130.

The case 120 may have an opening formed in an upper portion thereof in order to accommodate the insertion of an electrode assembly. After the electrode assembly is inserted through the opening of the case 120, an electrode tab of a positive or negative electrode of the electrode assembly may be electrically connected to an electrode terminal of the cap assembly 130. Then, by tightly connecting the cap assembly 130 to the case 120 by any suitable method, such as welding, the opening of the case 120 may be sealed.

Referring to FIG. 2, the secondary battery 100 includes an electrode assembly 110, the case 120, the cap assembly 130, and an insulating washer 140.

The electrode assembly 110 may include a first electrode, a second electrode, and a separator between the first electrode and the second electrode. In an embodiment, the electrode assembly 110 may be formed by winding a separator that is interposed between the first electrode and the second electrode. In this embodiment, by being wound, the electrode assembly 110 may form a winding core portion and may include a through-hole in the winding core portion.

The first electrode may include a first substrate and a first active material layer on the first substrate. A first electrode tab 112 may extend outward from a first non-coating region of the first substrate where the first active material layer is not formed. The first electrode tab 112 may be electrically connected to a terminal plate 136 of the cap assembly 130.

The second electrode may include a second substrate and a second active material layer on the second substrate. In an embodiment, a second electrode tab may extend outward from a second non-coating region of the second substrate where the second active material layer is not formed. The second electrode tab may be electrically connected to the case 120. In another embodiment, the second electrode tab may be omitted, and the second substrate may be directly electrically connected to the case 120.

The first electrode may function as a positive electrode. In this embodiment, for example, the first substrate may be composed of (or include) aluminum foil, and the first active material layer may, for example, include a transition metal oxide. The second electrode may function as a negative electrode. In this embodiment, for example, the second substrate may be composed of (or include) copper foil or nickel foil, and the second active material layer may, for example, include graphite.

The separator may be configured to allow lithium ions to move while preventing a short circuit between the first electrode and the second electrode. For example, in one or more embodiments, the separator may be composed of (or include) a polyethylene film, a polypropylene film, or a polyethylene-polypropylene film, but it is not limited thereto.

The secondary battery 100 may include the electrode assembly 110 and an exterior portion that accommodates the electrode assembly 110. The exterior portion of the secondary battery 100 may include the case 120 and the cap assembly 130 and may form the outer appearance of the secondary battery 100.

The case 120 may accommodate the electrode assembly 110 and an electrolyte. The case 120 may include a generally cylindrical sidewall 124 and a bottom 122 connected to one end (e.g., a lower end) of the sidewall 124. However, the present invention is not limited thereto, and the case 120 may be formed in various shapes such as prismatic, cylindrical, pouch-type, etc. In addition, the case may be composed of (or include) a metal such as aluminum, an aluminum alloy, or steel plated with nickel, or of a laminate film or plastic constituting a pouch.

The case 120 may accommodate the electrode assembly 110. The electrode assembly 110 may be inserted through an opening formed in one side or end of the case 120. Afterward, the opening of the case 120 may be sealed by the cap assembly 130.

By performing welding in a welding region A, A', the opening of the case 120 may be sealed by the cap assembly 130. A separator of the electrode assembly 110 may be longer in a height direction of the electrode assembly 110 than each of the first electrode and the second electrode. Due to a negative electrode substrate 116 that surrounds an outer circumference of the electrode assembly 110, one end of the separator of the electrode assembly 110 may be spaced apart from the welding region A, A'. Similarly, due to the negative electrode substrate 116, the first electrode tab 112 of the electrode assembly 110 may be spaced apart from the welding region A, A'. Thus, the separator may not be pinched between the case 120 and the cap assembly 130, and may not be damaged by the welding performed in the welding region A, A'. Also, a short circuit that might otherwise occur due to damaging the first electrode tab 112 by the welding operation performed in the welding region A, A' may be prevented.

The cap assembly 130 may include a cap plate 132, a degassing member 134, a terminal plate 136, and an insulating member 138. In one or more embodiments, the cap plate 132 may cover the opening of the case 120. The cap plate 132 may be coupled to a side surface (or an end surface) of the case 120 corresponding to the side surface (or end surface) of the opening in the case 120.

A conduction hole may be formed in the cap plate 132. In one or more embodiments, the conduction hole may be formed at the center (or substantially the center) of the cap plate 132. A terminal plate 136 (for example, an insertion portion 136b of the terminal plate) may be inserted into the conduction hole so that the terminal plate 136 is coupled to the cap plate 132. The terminal plate 136 may include a body portion 136a and the insertion portion 136b protruding (e.g., protruding downward) from the body portion 136a. In one or more embodiments, the insertion portion 136b of the terminal plate 136 may be inserted into the conduction hole of the cap plate 132. In addition, the insertion portion 136b of the terminal plate 136 may be connected by contacting the first electrode tab 112. The cap assembly 130 including the terminal plate 136 may be coupled to the case 120 such that the insertion portion 136b faces toward the electrode assembly 110.

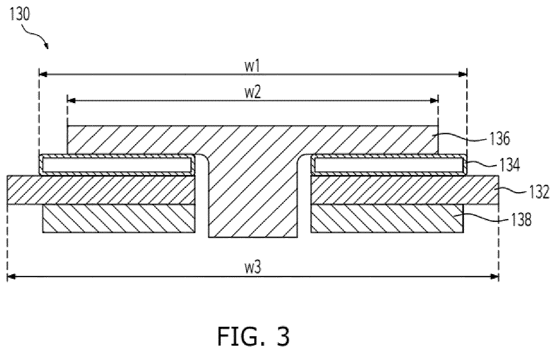

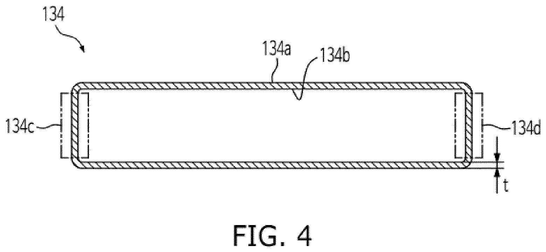

The degassing member 134 may be disposed between the terminal plate 136 and the cap plate 132. The degassing member 134 may be configured to release gas that is generated during charging and discharging of the secondary battery 100. An empty space may be formed inside the degassing member 134. The degassing member 134 may be configured to break in response to a pressure greater than or equal to a predetermined threshold being applied. The degassing member 134 may be broken during or after a formation process. The degassing member 134 may be broken by applying pressure in a direction from the terminal plate 136 toward the cap plate 132 or by a pressure of gas generated inside the case 120. A more detailed description of the degassing member 134 will be given below with reference to FIGS. 3 and 4.

In one or more embodiments, the degassing member 134 may include an adhesive and an electrically insulating material. Because the degassing member 134 includes an adhesive material, the degassing member 134 may couple the terminal plate 136 and the cap plate 132. Because the degassing member 134 includes an electrically insulating material, the degassing member 134 may electrically insulate the terminal plate 136 and the cap plate 132.

In an embodiment, the insulating member 138 may be disposed on a lower surface of the cap plate 132. Here, an upper surface of the cap plate 132 may face the body portion 136a of the terminal plate 136 (e.g., face away from the electrode assembly 110), and a lower surface of the cap plate 132 may face the electrode assembly 110. The insulating member 138 may be made of an insulating material and may insulate between the cap plate 132 and the electrode assembly 110 and/or between the cap plate 132 and the first electrode tab 112.

In an embodiment, the electrode assembly 110 may include a negative electrode substrate 116 surrounding an outer circumference thereof. In this embodiment, the negative electrode substrate 116 may be made of (or include) the same material as the substrate of the second electrode. In another embodiment, the substrate of the second electrode in the electrode assembly 110 may be extended and wound so as to surround the outer circumference of the electrode assembly 110. In this embodiment, the substrate of the second electrode may be a negative electrode substrate.

In an embodiment, the electrode assembly 110 may include a conductive tape 118 that surrounds at least part of the outermost circumference of the electrode assembly 110. The conductive tape 118 may fix the position of the wound electrode assembly 110 inside the case 120. For example, the winding of the first electrode, the second electrode, and the separator in the electrode assembly 110 may remain in place without unwinding due to the conductive tape 118. For example, because the conductive tape has adhesive strength, it may bond to at least part of the outermost circumference of the electrode assembly 110 to the case 120.

In an embodiment, the first electrode tab 112 may be bent below the terminal plate 136 within the case 120 in which the electrode assembly 110 is accommodated and the cap assembly 130 is coupled. The bent first electrode tab 112 may be prevented from short-circuiting with the electrode assembly 110 by the insulating washer 140. The insulating washer 140 may be disposed between the electrode assembly 110 and the terminal plate 136. In one or more embodiments, the insulating washer 140 may be disposed between the first electrode tab 112 located below the terminal plate 136 and the electrode assembly 110. The insulating washer 140 may include an insulating material. The insulating washer 140 may space the first electrode tab 112 apart from the electrode assembly 110. Also, the insulating washer 140 may electrically insulate the first electrode tab 112 and the electrode assembly 110.

FIG. 3 is a cross-sectional view illustrating a cap assembly including a degassing member 134 according to an embodiment of the present invention.

The cap assembly 130 may include a cap plate 132, a degassing member 134, a terminal plate 136, and an insulating member 138. An empty space may be formed inside the degassing member 134. The degassing member 134 may be configured to be broken by external pressure applied to the cap assembly 130 and/or by gas pressure generated inside the case 120, thereby releasing (venting) gas that is generated inside the case 120.

According to an embodiment, the degassing member 134 may be disposed between the cap plate 132 and the terminal plate 136. A shape of the degassing member 134 may substantially correspond to a shape of the cap plate 132. The degassing member 134 may include an electrically insulating material. The degassing member 134 may insulate the cap plate 132 and the terminal plate 136.

In an embodiment, a width w1 of the degassing member 134 may be greater than a width w2 of the terminal plate 136. Further, the width w1 of the degassing member 134 may be less than a width w3 of the cap plate 132. In one or more embodiments, the width w1 of the degassing member 134 may be between the width w2 of the terminal plate 136 and the width w3 of the cap plate 132. Accordingly, if the degassing member 134 is broken by pressure, the degassing member 134 may insulate between the cap plate 132 and the terminal plate 136.

In an embodiment, the insulating member 138 may be disposed on a lower surface of the cap plate 132. Here, an upper surface of the cap plate 132 may face the body portion 136a of the terminal plate 136 (e.g., face away from the electrode assembly 110) , and a lower surface of the cap plate 132 may face the electrode assembly 110. The insulating member 138 may be made of (or include) an insulating material and may insulate between the cap plate 132 and the electrode assembly 110 and/or between the cap plate 132 and the first electrode tab 112.

FIG. 4 is a cross-sectional view illustrating a degassing member 134 according to an embodiment of the present invention.

According to an embodiment, the shape of the degassing member 134 may substantially correspond to the shape of the cap plate 132, which includes a conduction hole. FIG. 4 shows a partial cross section of the degassing member 134. The degassing member 134 may include an outer end surface 134c and an inner end surface 134d corresponding to the conduction hole of the cap plate 132.

The degassing member 134 may be disposed between the terminal plate 136 and the cap plate 132. The degassing member 134 may include an outer surface 134a that contacts the cap plate 132 and the terminal plate 136, and an inner surface 134b that forms an empty space inside (e.g., a void, pocket, or chamber). The terminal plate 136 may be disposed on an upper surface of the outer surface 134a, and the cap plate 132 may be disposed on a lower surface of the outer surface 134a.

The degassing member 134 may be configured to break in response to a pressure greater than or equal to a predetermined threshold being applied. The degassing member 134 may be broken during or after a formation process. The degassing member 134 may be broken by pressure applied on the terminal plate 136 in a direction toward the cap plate 132 or by the pressure of gas generated inside the case 120.

The degassing member 134 may break at the outer end portion 134c and/or at the inner end portion 134d. Due to an internal pressure generated inside the case 120 or an external pressure applied to the case 120, the degassing member 134 may break at the outer end portion 134c and/or the inner end portion 134d. When the outer end portion 134c and/or the inner end portion 134d are broken, gas generated inside the case 120 may be discharged to the outside (vented). After the outer end portion 134c and/or the inner end portion 134d are broken, an upper side and a lower side of the inner surface 134b may contact each other (e.g., the degassing member 134 may be compressed or flattened in response to an internal pressure generated inside the case 120 or an external pressure applied to the case 120). The degassing member 134, after being broken, may still serve as an insulator and/or an adhesive between the cap plate 132 and the terminal plate 136.

In an embodiment, a thickness t of a wall of the degassing member 134 (i.e., the thickness t between the outer surface 134a and the inner surface 134b) may be greater than or equal to approximately 0.045 mm.

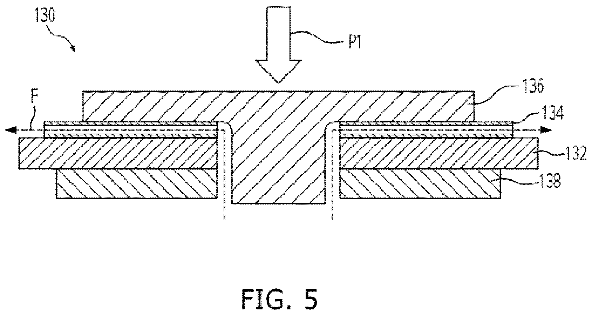

FIG. 5 is a diagram illustrating an example in which a degassing member is broken by external pressure such that gas inside a case is discharged to the outside according to an embodiment of the present invention.

The cap assembly 130 may include a cap plate 132, a degassing member 134, a terminal plate 136, and an insulating member 138. An empty space may be formed inside the degassing member 134. When the degassing member 134 is broken by external pressure, gas inside the case may be discharged (vented) to the outside.

During and/or after a formation process, gas may be generated inside the case. To discharge the gas inside the case, pressure P1 may be applied to the cap assembly 130 during and/or after the formation process. For example, pressure P1 may be applied from above the terminal plate 136 in a direction (e.g., downward) toward the cap plate 132. The degassing member 134 receiving the pressure P1 may be compressed. Due to the increase in internal pressure upon compression, the degassing member 134 may expand sideways (e.g., bulge) between the cap plate 132 and the terminal plate 136 and may break. As the degassing member 134 is broken, gas inside the case may be discharged F to the outside.

In an embodiment, the inside of the case 120 may have a pressure higher than atmospheric pressure (e.g., ambient pressure). If the degassing member 134 is broken by applying external pressure to the cap assembly 130, the gas inside the case may be discharged through the degassing member 134 due to the difference in pressure inside and outside the case 120. Because of the difference in pressure between the outside and inside of the case, only the gas inside the case may escape to the outside at the moment (or immediately following the moment) the degassing member 134 is broken, and outside air may not flow into the case.

When the degassing member 134 is broken, the empty space inside the degassing member 134 may disappear (e.g., eliminated or substantially eliminated). In this embodiment, the degassing member 134 may remain between the cap plate 132 and the terminal plate 136 in a thinner form than before degassing and may serve as an insulator and/or an adhesive.

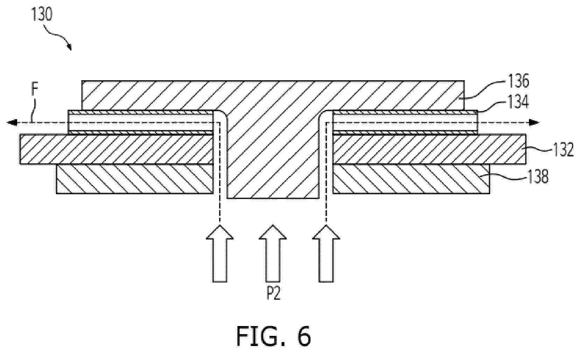

FIG. 6 is a diagram illustrating an example in which a degassing member is broken by internal pressure such that gas inside a case is discharged to the outside according to an embodiment of the present invention.

The cap assembly 130 may include a cap plate 132, a degassing member 134, a terminal plate 136, and an insulating member 138. An empty space may be formed inside the degassing member 134. When the degassing member 134 expands and subsequently breaks due to the internal pressure, gas inside the case may be discharged (vented) to the outside.

During and/or after a formation process, gas may be generated in the interior of the case. Due to the gas generated inside the case, pressure inside the case may increase. Due to the internal pressure, the degassing member 134 may expand. In an example, when the degassing member 134 expands, the terminal plate 136 may be slightly lifted by the degassing member 134. After or as the degassing member 134 expands due to internal pressure P2, it may break. After the degassing member 134 is broken, gas inside the case may be discharged (vented) in direction F to the outside.

When the degassing member 134 is broken, the empty space inside the degassing member 134 may be eliminated or substantially eliminated. For example, by applying pressure from above the terminal plate 136 toward the cap plate 132, it is possible to remove the empty space inside the degassing member 134. In this case, the degassing member 134 may remain between the cap plate 132 and the terminal plate 136 in a thinner form than before degassing and may serve as an insulator and/or an adhesive.

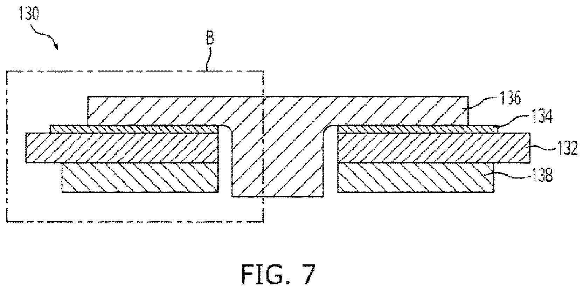

FIG. 7 is a diagram illustrating a state after the degassing member is broken according to an embodiment of the present invention.

The cap assembly 130 may include a cap plate 132, a degassing member 134, a terminal plate 136, and an insulating member 138. The degassing member 134 may be broken by internal and/or external pressure, thereby discharging (venting) gas inside the case to the outside.

When the degassing member 134 is broken, the empty space inside the degassing member 134 may be eliminated or substantially eliminated. In this embodiment, the degassing member 134 may take a thinner form than before degassing between the cap plate 132 and the terminal plate 136.

In an embodiment, the degassing member 134 may be disposed between the cap plate 132 and the terminal plate 136. A shape of the degassing member 134 may correspond (or substantially correspond) to a shape of the cap plate 132. The degassing member 134 may include an electrically insulating material. Accordingly, the degassing member 134 may insulate the cap plate 132 and the terminal plate 136. In addition, because the degassing member 134 includes an adhesive material, the degassing member 134 may couple the terminal plate 136 and the cap plate 132. Accordingly, the degassing member 134 may serve as an insulator and/or an adhesive between the cap plate 132 and the terminal plate 136.

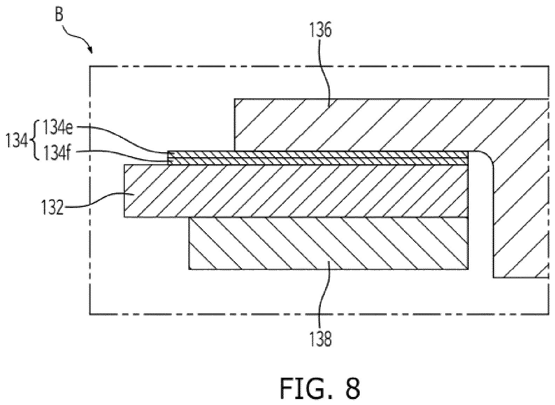

FIG. 8 is an enlarged view illustrating the state after the degassing member of FIG. 7 is broken.

As illustrated, the degassing member 134 may be separated into an upper member 134e and a lower member 134f due to breakage (e.g., rupture) of the degassing member 134. Gas inside the case may be released to the outside of the case through a space between the upper member 134e and the lower member 134f. After breaking, the upper member 134e and the lower member 134f may contact each other at their inner surfaces that face each other. As a result, the empty space inside the degassing member 134 may be eliminated (or substantially eliminated). The degassing member 134 may remain between the cap plate 132 and the terminal plate 136 in a thinner form than before degassing and may serve as an insulator and/or an adhesive. To this end, the degassing member 134 may include an electrically insulating material and/or an adhesive material.

A size of the width of the degassing member 134 may be formed smaller than that of the cap plate 132 but larger than that of the terminal plate 136.

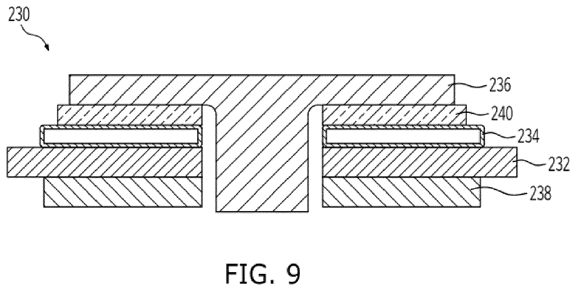

FIG. 9 is a cross-sectional view illustrating a cap assembly 230 including a degassing member 234 according to another embodiment of the present invention.

A cap assembly 230 may include a cap plate 232, a degassing member 234, a terminal plate 236, a first insulating member 238, and a second insulating member 240. An empty space may be formed inside the degassing member 234. The degassing member 234 may be broken by external pressure applied to the cap assembly 230 and/or by gas pressure generated inside the case, thereby releasing (venting) the gas generated inside the case.

The degassing member 234 according to an embodiment may be disposed between the cap plate 232 and the terminal plate 236. A shape of the degassing member 234 may correspond (or substantially correspond) to a shape of the cap plate 232. The degassing member 234 may include an electrically insulating material. The degassing member 234 may insulate the cap plate 232 and the terminal plate 236.

The first insulating member 238 may be disposed on a lower surface of the cap plate 232. The first insulating member 238 may be made of an insulating material and may insulate between the cap plate 232 and the electrode assembly and/or between the cap plate 232 and a first electrode tab.

The second insulating member 240 may be disposed between the degassing member 234 and the terminal plate 236. The second insulating member 240 may be made of an insulating material and may more reliably insulate between the cap plate 232 and the terminal plate 236.

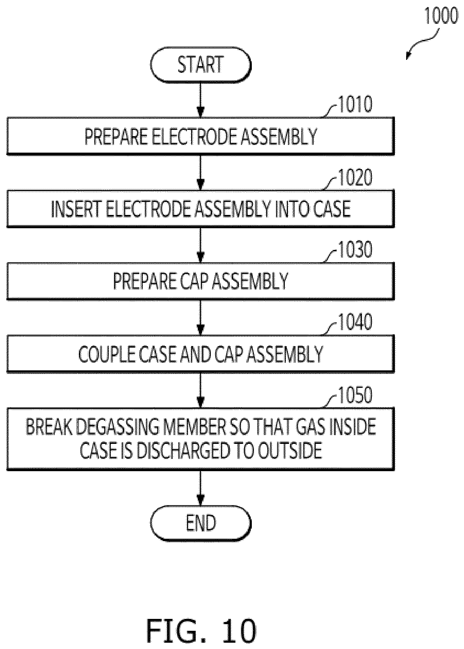

FIG. 10 is a flowchart illustrating an example of a secondary battery manufacturing method 1000 according to an embodiment of the present invention.

Referring to FIG. 10, the secondary battery manufacturing method 1000 according to an embodiment may include a step 1010 of preparing an electrode assembly, a step 1020 of inserting the electrode assembly into a case, a step 1030 of preparing a cap assembly, a step 1040 of coupling the case and the cap assembly together, and a step 1050 of breaking (e.g., rupturing) a degassing member such that gas inside the case is discharged (vented) to the outside.

In an embodiment, the step 1010 of preparing the electrode assembly may include preparing an electrode assembly that includes a first electrode having an electrode tab, a second electrode, and a separator interposed between the first electrode and the second electrode. The step 1020 of inserting the electrode assembly into the case may include inserting the electrode assembly into a case that includes an opening configured to expose an upper surface of the electrode assembly.

The step 1030 of preparing the cap assembly may include preparing a cap assembly that includes a cap plate, a terminal plate, and a degassing member. The cap plate may include a conduction hole. The terminal plate may be disposed on an upper portion of the cap plate and may be electrically connected to the electrode tab through the conduction hole of the cap plate. The degassing member may be disposed between the cap plate and the terminal plate, may have an empty space formed therein, and may be configured to be broken by a pressure greater than or equal to a predetermined threshold pressure.

The step 1040 of coupling the case and the cap assembly may include coupling the cap assembly to the opening of the case and thereby sealing the case.

The step 1050 of breaking (e.g., rupturing) the degassing member such that gas inside the case is discharged (vented) to the outside may include breaking the degassing member due to an internal pressure generated inside the case or due to an external pressure applied to the cap assembly such that gas inside the case is discharged (vented) to the outside of the case. The step 1050 may be referred to as a degassing step. During and/or after a formation process, gas generated inside the case may increase the internal pressure such that the degassing member expands and breaks (e.g., ruptures). Additionally or alternatively, the degassing member may be broken (e.g., ruptured) by applying pressure to the cap assembly during and/or after the formation process. By performing the degassing step, gas inside the case may be discharged (vented) to the outside of the case through the broken (e.g., ruptured) degassing member.

Although the present invention has been described with reference to embodiments and drawings illustrating aspects thereof, the present invention is not limited thereto. Various modifications and variations can be made by a person skilled in the art to which the present invention belongs within the scope of the technical spirit of the present invention and the claims and their equivalents, below.

## Claims

1. A method of manufacturing a secondary battery comprising:
preparing an electrode assembly (110) that comprises a first electrode including an electrode tab (112), a second electrode, and a separator interposed between the first electrode and the second electrode;
inserting the electrode assembly (110) into a case (120) that comprises an opening configured to expose an upper surface of the electrode assembly (110);
preparing a cap assembly (130, 230) that comprises a cap plate (132, 232) having a conduction hole, a terminal plate (136, 236) on an upper portion of the cap plate (132, 232) and configured to be electrically connected to the electrode tab (112) through the conduction hole, and a degassing member (134, 234) between the cap plate (132, 232) and the terminal plate (136, 236) and having an empty space therein;
coupling the case (120) and the cap assembly (130, 230) together; and
performing a degassing step in which the degassing member (134, 234) is broken such that a gas inside the case (120) is discharged to an outside of the case (120).

2. The method of manufacturing the secondary battery according to claim 1, wherein the degassing member (134, 234) is configured to break in response to a pressure greater than or equal to a predetermined threshold being applied to the degassing member (134, 234).

3. The method of manufacturing the secondary battery according to claims 1 or 2, wherein the performing the degassing step comprises:
breaking the degassing member (134, 234) by applying pressure to the terminal plate (136, 236) in a direction toward the cap plate (132, 232).

4. The method of manufacturing the secondary battery according to any of claims 1 to 3, wherein the performing the degassing step comprises:
breaking the degassing member (134, 234) due to a pressure of the gas generated inside the case (120).

5. The method of manufacturing the secondary battery according to any of claims 1 to 4, wherein the degassing member (134) comprises an outer surface (134a) contacting the cap plate (132) and the terminal plate (136), and an inner surface (134b) forming the empty space therein.

6. The method of manufacturing the secondary battery according to any of claims 1 to 5, wherein the performing the degassing step comprises:
separating the degassing member (134) into an upper member (134e) and a lower member (134f) by breakage and releasing the gas inside the case (120) between the upper member (134e) and the lower member (134f).

7. The method of manufacturing the secondary battery according to any of claims 1 to 6, wherein a width of the degassing member (134, 234) is greater than a width of the terminal plate (136, 236).

8. The method of manufacturing the secondary battery according to any of claims 1 to 7, wherein a width of the degassing member (134, 234) is less than a width of the cap plate (132, 232).

9. The method of manufacturing the secondary battery according to any of claims 1 to 8, wherein the cap assembly (130, 230) further comprises an insulating member (138) between the terminal plate (136, 236) and the degassing member (134, 234).

10. A cap assembly (130, 230) for a secondary battery comprising:
a cap plate (132, 232) configured to be coupled to a case (120) of the secondary battery (100) and comprising a conduction hole exposing a portion of the case (120);
a terminal plate (136, 236) on an upper portion of the cap plate (132, 232) and configured to be electrically connected to an electrode tab (112) of the secondary battery (100) through the conduction hole; and
a degassing member (134, 234) between the cap plate (132, 232) and the terminal plate (136, 236), the degassing member (134, 234) comprising an empty space therein.

11. The cap assembly (130, 230) for the secondary battery according to claim 10, wherein the degassing member (134, 234) is configured to break in response to a pressure greater than or equal to a predetermined threshold being applied to the degassing member (134, 234).

12. The cap assembly (130, 230) for the secondary battery according to claim 10 or 11, wherein the degassing member (134) comprises an outer surface contacting the cap plate (132, 232) and the terminal plate (136, 236), and an inner surface forming the empty space therein.

13. The cap assembly (130, 230) for the secondary battery according to any of claims 10 to 12, wherein the degassing member (134, 234) comprises an adhesive material and an electrically insulating material.

14. The cap assembly (130, 230) for the secondary battery according to any of claims 10 to 13, wherein a width of the degassing member (134, 234) is greater than a width of the terminal plate (136, 236) and less than a width of the cap plate (132, 232).

15. The cap assembly (130, 230) for the secondary battery according to any of claims 10 to 14, further comprising an insulating member (138) between the terminal plate (136, 236) and the degassing member (134, 234).
